# EUROPEAN PATENT APPLICATION

(11) **EP 1 571 041 A1**
(43) Date of publication of application: **07.09.2005**
(21) Application number: 05250503.9
(22) Date of filing: 31.01.2005
(51) Int. Cl.: B60R 1/072

(54) **Actuator for exterior rear view mirror**

(30) Priority: 02.03.2004 JP 2004057180
(71) Applicant: Murakami Corporation, Shizuoka, 422-8569 (JP)
(72) Inventor: Fukai, Akira, Murakami Corporation, Fujieda-shi, Shizuoka (JP); Endoh, Fuminori, Murakami Corporation, Fujieda-shi, Shizuoka (JP)
(74) Representative: Piésold, Alexander James

(57) **Abstract**

An actuator 1 for an exterior rear view mirror possesses a first motor 3A, a first worm wheel 4A, and a first rod 5A as the first angle-adjusting mechanism. It also possesses and a second motor 3B, a second worm wheel 4B, and a second rod 5B as the second angle-adjusting mechanism. The first motor 3A and the second motor 3B have the same shape. The first motor 3A is accommodated within an actuator housing 2 at a front side. The second motor 3B is accommodated within an actuator housing 2 at a rear side. These motors 3A and 3B are placed so that they are overlapped with each other when viewed in a direction perpendicular to the mirror surface.

## Description

The present invention relates to an actuator for a vehicle exterior rear view mirror, which adjusts an angle of a mirror surface possessed by the exterior rear view mirror. The application is based on Japanese Patent Application No. 2004-057180, filed on March 2, 2004.

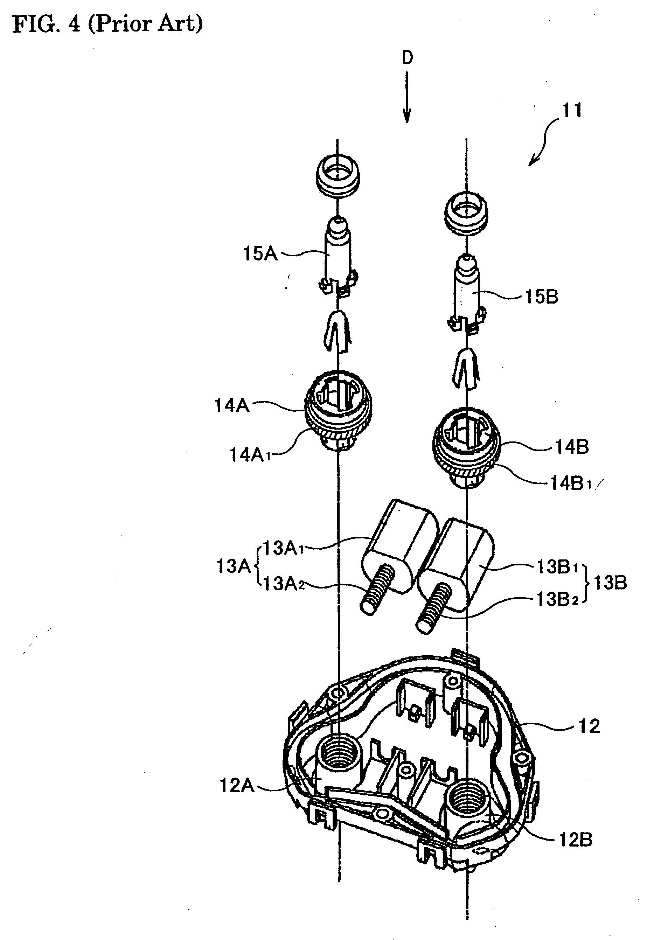

In order to adjust an angle of a vehicle exterior rear view mirror, an actuator has been placed within a housing for an exterior rear view mirror (for example, see Japanese Patent Laid-Open No. 2002-67795). FIG. 4 is an exploded perspective view showing an actuator for an exterior rear view mirror disclosed in Japanese Patent Laid-Open No. 2002-67795.

As shown in FIG. 4, an actuator 11 for an exterior rear view mirror (hereinafter simply referred to as "actuator") has a motor 13A serving as a first angle adjusting mechanism (for example, adjustment of an angle of the vertical direction), a worm wheel 14A and a rod 15A provided within an actuator housing 12. The actuator 11 also possesses, as a second angle adjusting mechanism (for example, adjustment of an angle of the horizontal direction), a motor 13B, a worm wheel 14B, and a rod 15B.

The motor 13A (13B) is placed within the actuator housing 12, and power is supplied from an external power source to the motor 13A (13B) to rotate a worm 13A₂ (13B₂). The worm wheel 14A (14B) possesses a gear portion 14A₁ (14B₁). The gear portion 14A₁ (13B₂) is engaged with the worm 13A₂ (13B₂). The rod 15A (15B) is fitted to the worm wheel 14A (14B) in the state where it is not rotated, and is screwed to a female screw formed on an inner wall of a cylindrical portion 12A (12B) of the actuator housing 12.

When the motor 13A (13B) is driven, the worm 13A₂ (13B₂) is rotated. The rotation of the worm 13A₂ (13B₂) allows the rod 15A (15B) for moving in the front or rear direction, to thereby fluctuate the mirror.

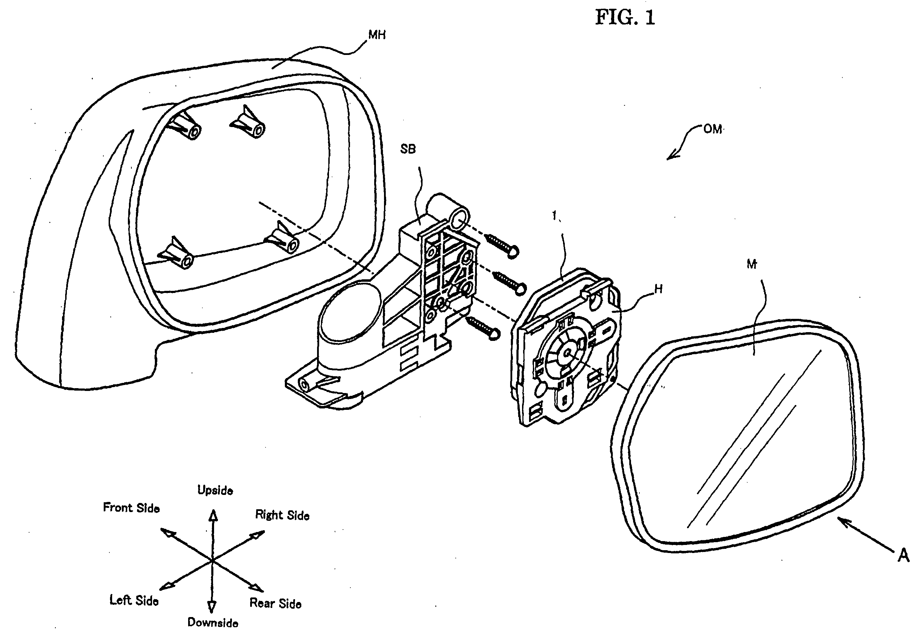

Accompanying the exterior rear view mirror which has multi- functions, various parts and members are also accommodated within the mirror housing. Accordingly, it has been desired that the actuator 11 is much more miniaturized. Particularly, there is a demand that any other parts and members are accommodated at vertical sides and horizontal sides of the actuator 11 (see FIG. 1), i.e., around directions parallel to the mirror surface. However, since the motor 13A and the motor 13B are placed on the same surface parallel to the mirror surface in the conventional actuator 11, the miniaturization of the actuator 11 is strictly restricted.

An object of at least the preferred embodiments of the present invention is, therefore, to provide an actuator for an exterior rear view mirror, which makes it possible to miniaturize the extent of the actuator parallel to the mirror surface.

According to the present invention, there is provided an actuator for an exterior rear view mirror accommodated within a mirror housing, comprising a first motor for adjusting a first angle of the mirror and a second motor for adjusting a second angle of the mirror: said first motor and said second motor being placed so as to be at least partially overlapped with each other when the mirror surface is viewed from the vertical direction.

The term "the adjustment of two angles of mirror", i.e., the first angle and the second angle intended herein means the adjustment so that the mirror can be fluctuated 360° around the fluctuation center of the mirror as the axis. The combination of the adjustment of the first angle in the vertical direction with the adjustment of the second angle in the horizontal direction or vice versa is proven to be preferable.

In the actuator according to preferred embodiments of the present invention, the actuator may further possess a first worm wheel and a second worm wheel each comprising a gear portion, which can be engaged with the worm of the motor, a first cylindrical portion having a first height provided on one side of said gear portion, and a second cylindrical portion having a second height provided on another side of said gear portion, wherein the gear portion of said gear portion of the first worm wheel is engaged with the worm of the first motor, and the gear portion of said second worm wheel is engaged with the worm of said second motor in the state that said first gear wheel is reversed.

The term "first height" used herein means a height that the gear portion is engaged with the worm of the first motor when the first cylindrical portion is at a front side within the actuator housing. The term "second height" used herein means a height that the gear portion is engaged with the worm of the second motor when the second cylindrical portion is at a front side within the actuator housing

Preferred embodiments of the present invention will now be described by way of example only and with reference to the accompanying drawings, in which:
FIG. 1 is an exploded perspective view showing a main portion of the exterior rear view mirror having the actuator for an exterior rear view mirror according to an embodiment of the present invention.
FIG. 2 is a schematic view showing the actuator for an exterior rear view mirror of FIG. 1.
FIG. 3 is a schematic view of the prior art for comparison with the present invention.
FIG. 4 is an exploded perspective view showing an actuator for an exterior rear view mirror disclosed in Japanese Patent Laid-Open No. 2002-67795.

In the following embodiments, an exterior rear view mirror at the right side is exemplified. The expression relating to the directions, i.e., upside, downside, right side, left side, front side, and rear side, is based on the use state of the exterior rear view mirror. The same portions are assigned to the same numbers or symbols, and repeated description will be omitted.

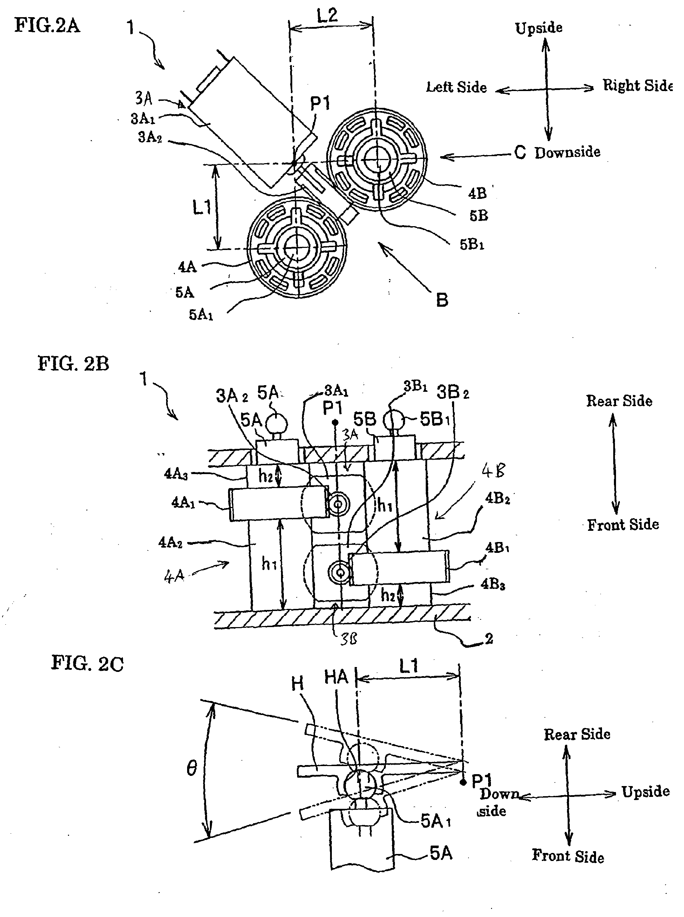

FIG. 1 is an exploded perspective view showing a main portion of the exterior rear view mirror having the actuator for an exterior rear view mirror according to an embodiment of the present invention, and FIG. 2 is a schematic view showing the actuator for an exterior rear view mirror of FIG. 1.

### (Exterior rear view mirror OM)

As shown in FIG. 1, an exterior rear view mirror OM possesses a mirror housing MH, a frame SB, an actuator 1 for an exterior rear view mirror (hereinafter simply referred to as "actuator"), a mirror holder H, and a mirror M.

The mirror housing MH is supported by a stay (not shown), which is fixed onto a side body of a vehicle, in a state of capable of being fluctuated. Since the support construction of the mirror holder H by the actuator 1 is well known in the art, the description of how to support the mirror holder H by the actuator 1 will be omitted (As for the support construction of the mirror see for example, Japanese Patent Laid-Open No. 2002-67795).

### (Actuator 1)

Subsequently, referring to FIG. 2, the arrangement of the motors and worm wheels in the actuator 1 will now be described (also referring to FIG. 1, as occasion may demand). FIG. 2A is a drawing viewing from line A-A of FIG. 1 which explains the motors, the worm wheels and the rod of the actuator; FIG. 2B is a drawing viewing from line B-B of FIG. 2A, which explains the motors and the worm wheels; and FIG. 2C is a drawing viewing from line C-C of FIG. 2A, which explains an adjust pan.

The actuator 1 possesses a first angle-adjusting mechanism and a second angle-adjusting mechanism within the actuator housing 2. The first angle-adjusting mechanism is a mechanism that fluctuates the holder H and the mirror M taking a fluctuation center P1 as an axis whereby the angle of the mirror M in the vertical direction is adjusted. The second angle-adjusting mechanism is a mechanism that fluctuates the holder H and the mirror M taking a fluctuation center P1 as an axis whereby the angle of the mirror M in the horizontal direction is adjusted.

### (First Angle-Regulating Mechanism)

The actuator 1 possesses a first motor 3A, a first worm wheel 4A, and a first rod 5A as the first angle-adjusting mechanism.

As shown in FIG. 2A and FIG. 2B the first motor 3A possesses a body 3A₁ of the motor, which is driven by supplying a power from an outer power source thereto, and a worm 3A₂, which is rotated by driving the body 3A₁ of the motor. The first motor 3A is accommodated within the actuator housing 2 in a state that the direction of the axis line of the worm 3A₂ is in the direction of 45° towards the lower right side. The first motor 3A and a second motor 3B, which will be described later on, are placed so that they are overlapped with each other when the mirror (see FIG. 1) is viewed from the vertical side. In this embodiment, the first motor 3A is placed at a rear side of the actuator housing 2, and the second motor 3B is placed at a front side of the first motor 3A.

As shown in FIG. 2B, the first worm wheel 4A is a cylindrical member, and possesses a gear portion 4A₁, a first cylindrical portion 4A₂ (long cylindrical portion), and a second cylindrical portion 4A₂ (short cylindrical portion). The first worm wheel 4A is provided at an upper right portion of the worm 3A₂ in the state that the rotation axis thereof becomes the front and rear direction. The gear portion 4A₁, is engaged with the worm 3A₂, and is rotated by the rotation of the worm 3A₂. The first cylindrical portion 4A₂ extends towards the rotation axis from the gear portion 4A₁ to the first worm wheel 4A. In this embodiment, the first cylindrical portion 4A₂ is at a front side. The first cylindrical portion 4A₂ possesses such a height that, in such a state as just mentioned, the gear portion 4A₁ can be engaged with the worm 3A₂ (first height h₁). The second cylindrical portion 4A₃ extends towards the direction reversed to that of the first cylindrical portion 4A₂. In this embodiment, the second cylindrical portion 4A₃ is at a rear side. The second cylindrical portion 4A₃ possesses a second height h₂ [see the third paragraph of column (Second Angle-Regulating Mechanism)]. It is noted that here the first height h₁ is larger than the second height h₂. The first worm wheel 4A is configured so that the rods can be fitted to both the side of the first cylindrical portion 4A₂ and the side of the second cylindrical portion 4A₃. In this embodiment, a first rod 5A is fitted to a side of the second cylindrical portion 4A₃.

As shown in FIG. 2B, the first rod 5A is fitted to a side of the second cylindrical portion 4A₃ of the first worm wheel 4A in the state that it cannot be rotated relative to the first worm wheel 4A, and moves in the front direction or rear direction according to the rotation of the first worm wheel 4A to adjust the first angle of the mirror M (see FIG. 1) (in this embodiment, an angle in the vertical direction). Such a fitting structure is well known in the art, and, for example, a communicating piece provided on a circumferential surface of the first rod 5A is communicated with a concave portion provided on an inner circumferential portion of the first worm wheel, whereby the first rod 5A can be fitted in the state that it cannot be rotated relative to the first worm wheel 4A. Also, the end of the first rod 5A may be screwed onto a male screw portion or a female screw portion standing on an inside of the front surface of the mirror housing 2, so that the first rod 5A may move in the front and rear direction according to the rotation of the first wheel worm 4. As shown in FIG. 2C, a pivot 5A₁ provided on the end of the first rod 5A is inserted into a concave portion HA provided on a front surface of the mirror holder H. Such an insertion portion is set so as to be positioned at a lower side of the horizontal direction of the fluctuation center P1. When the first rod 5A moves in the rear direction, then the mirror M and the mirror holder H fluctuate so that they are directed toward an upside. Conversely, when the first rod 5A moves in the front direction, then the mirror M and the mirror holder H fluctuate so that they are directed toward a downside.

### (Second Angle-Regulating Mechanism)

The actuator 1 possesses a second motor 3B, a second worm wheel 4B, and a second rod 5B as the second angle-adjusting mechanism.

As shown in FIG. 2A. the second motor 3B comprises a member having the same shape as that of the first motor 3A, and possesses a body 3B₁ of the motor, which is driven by supplying a power from an outer power source thereto, and a worm 3B₂, which is rotated by driving the body 3B₁ of the motor. The second motor 3A is accommodated within the actuator housing 2 in a state that the direction of the axis line of the worm 3B₂ is in the direction of 45° towards the lower right side.

As shown in FIG. 2B, the second worm wheel 4B is used by reversing a worm wheel having the same shape as that of the first worm wheel 4A into the front side and the rear side, and possesses a gear portion 4B₁, a first cylindrical portion 4B₂ (long cylindrical portion), and a second cylindrical portion 4B₃ (short cylindrical portion). The second worm wheel 4B is provided at a lower left portion of the worm 3B₂ in the state that the rotation axis thereof becomes the front and rear direction. The gear portion 4B₁, is engaged with the worm 3B₂, and is rotated by the rotation of the worm 3B₂. The first cylindrical portion 4B₂ extends towards the rotation axis from the gear portion 4B₁ to the second worm wheel 4B. In this embodiment, the first cylindrical portion 4B₂ is at a rear side. The first cylindrical portion 4B₂ possesses the first height hi. The second cylindrical portion 4B₃ extends towards the direction reversed to that of the first cylindrical portion 4B₂. In this embodiment, the second cylindrical portion 4B₃ is at a front side. The second cylindrical portion 4B₃ possesses such a height that, in such a state, the gear portion 4B₁ can be engaged with the worm 3B₂ (second height h₂).

As shown in FIG. 2B, the second rod 5B comprises a member having the same shape as that of the first rod 5A, is fitted to a side of the second cylindrical portion 4B₃ of the second worm wheel 4B in the state that it cannot be rotated relative to the second worm wheel 4B, and moves in the front direction or the rear direction according to the rotation of the second worm wheel 4B to adjust the second angle of the mirror M (see FIG. 1) (in this embodiment, an angle in the horizontal direction). A pivot 5B₁ provided on the end of the second rod 5B is inserted into a concave portion (not shown) provided on a front surface of the mirror holder H.
Such an insertion portion is set so as to be positioned at a right side of the horizontal direction of the fluctuation center P1. When the second rod 5B moves in the rear direction, then the mirror M (see FIG. 1) and the mirror holder H fluctuate so that they are directed toward a left side. Conversely, when the second rod 5B moves in the front direction, then the mirror M and the mirror holder H fluctuate so that they are directed toward a right side.

In this embodiment, the wheel having the same shape is used as the first worm wheel 4A and the second worm wheel 4B. Specifically, the gear portion 4A₁, the first cylindrical portion 4A₂ and the second cylindrical portion 4A₃ of the first worm wheel 4A have the same shapes as those of the gear portion 4B₁, the first cylindrical portion 4B₂ and the second cylindrical portion 4B₃ of the second worm wheel 4B, respectively. The worm wheel, which has been reversed, is used to make common use of a single component for the worm wheel 4A and 4B.

It is noted that, as shown in FIG. 2A, since the actuator 1 is formed into a line symmetry taking the fluctuation axis line of the worm as the symmetric axis, viewing the mirror M from the vertical side, when clockwise rotating 90° in FIG. 2A, the actuator is applicable to the exterior rear view mirror for a vehicle at a left side.

### (Comparison of the Present Invention with Prior Art)

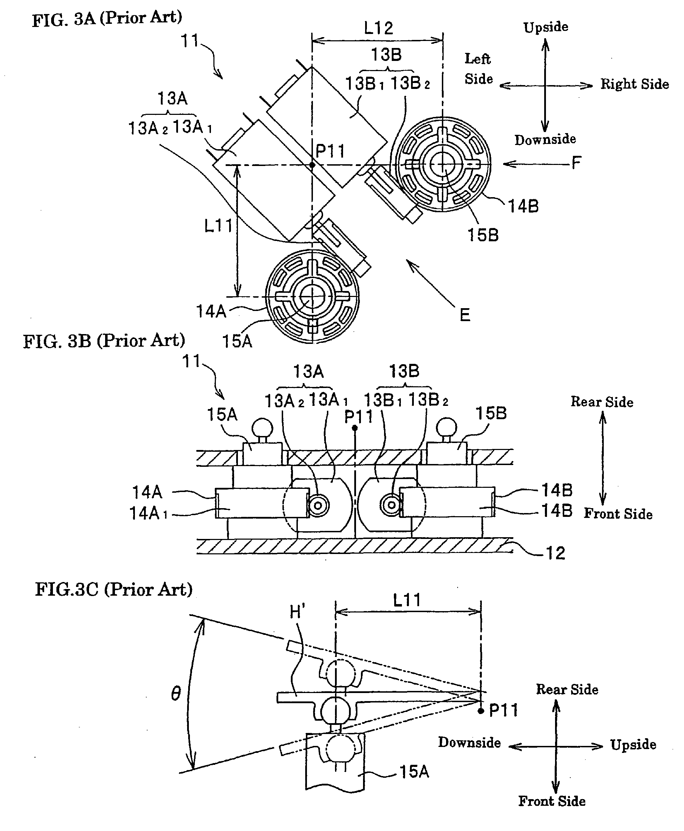

The actuator of a preferred embodiment of the present invention will be compared with the actuator of the prior art referring to FIG. 2 and FIG. 3. In this comparison, it is assumed that all of the first motor 3A and the second motor 3B in a preferred embodiment of the present invention, a first motor 13A and a second motor 13B in the prior art have the same shape. Specifically, the worms 3A₂, 3B₂, 13A₂, 13B₂ in a preferred embodiment of the present invention and in the prior art are made up of the same part and, in other words, the modules for the worm gear (combination of the worm with the worm gear) are the same. FIG. 3 schematically shows the motors, the worm wheels and the rods of the conventional actuator. Specifically, FIG. 3A is a is a drawing viewing from line D-D of FIG. 4, which schematically explains the motors, the worm wheels and the rod; FIG. 3B is a drawing viewing from line E-E of FIG. 3A, which explains the motors and the worm wheels; and FIG. 3C is a drawing viewing from line C-C of FIG. 3A, which explains an adjust pan. In these figures, the symbol "Pll" represents a fluctuation center of the mirror in the exterior rear view mirror having the conventional actuator. The symbol "H" is a mirror holder in the exterior rear view mirror having the conventional actuator.

The term "adjust pan" used herein means a distance from the fluctuation center to the position where the mirror is pushed or drawn for fluctuating the mirror. By decreasing the adjust pan, the actuation for fluctuating the mirror to a desired angle can be decreased.

In the actuator according to a preferred embodiment of the present invention shown in FIG. 2A and FIG. 2B, the first motor 3A and the second motor 3B are motors each having the same shape. The first motor 3A is placed at a rear side of the actuator housing 2. The second motor 3B is placed at a front side of the actuator housing 2. These motors 3A and 3B are placed so that they are overlapped with each other when the mirror surface is viewed from the vertical direction (i.e. perpendicular to the mirror surface). Specifically, these motors 3A and 3B are arranged in the same state in the vertical direction of the mirror surface. On the other hand, the motors 13A and 13B in the conventional actuator shown in FIG. 2A and FIG. 2B are motors having the same shape. These motors 13A and 13B are arranged so that they are aligned in the horizontal direction of the mirror surface. As shown in FIG. 2, in the actuator 1 according to this embodiment, only one motor is placed in the horizontal direction of the mirror M. This makes it possible to miniaturize the actuator in the horizontal direction.

In comparison with the conventional actuator 11, the actuator 1 has a large thickness in the front and rear direction. However, since there is a relatively large space in the front and rear direction of the mirror housing MH (see FIG.1), and since it is difficult to effectively use such a space, for example placement of any other parts, enlargement in the front and rear spaces does not have any adverse influence upon an exterior rear view mirror OM (see FIG. 1).

As shown in FIG. 2A an adjust pan of the actuator 1 according to a preferred embodiment of the present invention in the vertical direction is LI, and an adjust pan in the horizontal direction is L2 (in this embodiment, L1=L2). On the other hand, as shown in FIG. 3A, an adjust pan of the conventional actuator 11 in the vertical direction is L11, and an adjust pan in the horizontal direction is L12 (in this embodiment, L11=L12). In the actuator 1 according to the present invention, the first motor 3A and the second motor 3B are perfectly overlapped with each other when the mirror surface is viewed from the vertical direction, and the fluctuation center P1 of the actuator 1 is positioned at these motors when the mirror surface is viewed from the vertical direction. On the other hand, in the conventional actuator 11, the first motor 13A and the second motor 13B are arranged in the side way direction, when the mirror surface is viewed from the vertical direction, and the fluctuation center P 11 of the actuator 11 is positioned between the first motor 13A and the second motor 13B. For this reason, the relation of the adjust pans are: L1>L11; and L2>L12. Consequently, as shown in FIG. 2C and FIG. 3C, when the mirror M (and the mirror holder H) is fluctuated to a desired angle G, the amount of the movement of the rod in the actuator 1 is smaller than that of the actuator 11. Specifically, the amounts of driving the motors in the actuator in the actuator 1 may be decreased, making it possible to realize much more economic, and rapid angle adjustment.

The actuator 1 according to the present invention may be made up of the same motors as those of the conventional actuator 11. Consequently, the actuator 1 can be miniaturized without miniaturizing the motors. Accordingly, various problems associated with miniaturization of the motors (including investment in plant and equipment, and production cost) can be avoided. The actuator 1 according to the present invention can be produced in the same modules as those of the conventional actuator 11. For this reason, the actuator 1 can be miniaturized without miniaturizing the module of the worm gear. Accordingly, various problems associated with miniaturization of the moduble of the worm gear (including investment in plant and equipment, production cost, decrease in the formation precision, and quality control of operation) can be avoided. These descriptions are not intended to the miniaturization of the motors and the miniaturization of the module.

According to the present invention, when two motors, which has hitherto been arranged so as to aligned in the sideway direction, are placed so that they are overlapped with each other when the mirror surface is viewed from the vertical direction, i.e., when the motors are arranged in the direction perpendicular to the mirror surface, the actuator whose dimension in a direction parallel to the mirror surface has been miniaturized can be obtained.

The arrangement of two motors so that they are overlapped with each other when the mirror surface is viewed from the vertical direction makes an adjust pan small.

In the worm wheel (first worm wheel) at the side of the first motor, the first cylindrical portion is placed at a front side, and the gear portion is engaged with the worm of the first motor. Then, the first worm wheel is fitted so as to project from the second cylindrical portion where the rod resides at a rear portion. On the other hand, in the worm wheel (second worm wheel) at the side of the second motor, the second cylindrical portion is placed at a front side, and the gear portion is engaged with the worm of the second motor. Then, the second worm wheel is fitted so as to project from the first cylindrical portion where the rod resides at a rear portion Specifically, two worm wheels each having the same shape are ready, and they are used in such a manner that they are placed in the reversed state with each other. This makes it possible to commonly use the parts of the first worm wheel and the second worm wheel.

According to the present invention, the actuator in which the direction parallel to the mirror surface can be miniaturized is provided. Also, spaces, which can be effectively used, can be provided within the mirror housing. The miniaturization, which can be attained by the conventional parts such as motors and worm wheels, avoids the need for investment in plant and equipment due to alternation of design. Of course, when the parts such as the motors and the worm wheels are miniaturized, much more miniaturization can be attained. Also, according to the preferred embodiments of present invention, the actuation required for fluctuation of the mirror to a desired angle can be decreased.

While the embodiments of the present invention have been described, it should be understood that the present invention is not restricted thereto, and various modifications and alternations of design can be made without departing from the scope of the present invention. For example, the mirror M and the mirror holder MH may be unified type. Also, the shapes of the mirror housing MH and the frame SB are not restricted to those depicted on the figure. How to fit the actuator 1 to the mirror housing MH may also be changed. Furthermore, while the embodiment where the first motor 3A and the second motor 3B are perfectly overlapped with each other when the mirror surface is viewed from the vertical direction has been described, they may be placed so that they are partially overlapped, or the shapes of these motors may be different from each other.

## Claims

1. An actuator for an exterior rear view mirror accommodated within a mirror housing, the actuator comprising a first motor for adjusting a first angle of the mirror and a second motor for adjusting a second angle of the mirror, said first motor and said second motor being placed so as to be at least partially overlapped with each other when viewed in a direction perpendicular to the mirror surface.

2. An actuator as claimed in claim 1, which further comprises a first worm wheel and a second worm wheel each comprising a gear portion, which is engaged with a worm of a respective motor, a first cylindrical portion having a first height provided on one side of said gear portion, and a second cylindrical portion having a second height provided on another side of said gear portion, wherein the first worm wheel is inverted relative to the second worm wheel.

3. An actuator as claimed in claim 2, wherein the first worm wheel and the second worm wheel have the same shape.

4. An actuator as claimed in claim 2 or 3, wherein all of the worms and all of the gear portions comprise the same parts.

5. An actuator as claimed in claim 2, 3 or 4, wherein a communicating piece provided on a circumferential surface of a first rod is communicated with a concave portion provided on an inner circumferential portion of the first worm wheel, whereby the first rod is fitted in a state such that it cannot be rotated relative to the first worm wheel.

6. An actuator as claimed in any preceding claim, wherein the first motor adjusts the angle of the mirror in the vertical direction, and the second motor adjusts the angle of the mirror in the horizontal direction.

7. The actuator as claimed in any preceding claim, wherein the first motor and said second motor are placed so as to be substantially overlapped with each other when viewed in a direction perpendicular to the mirror surface.

8. A vehicle exterior rear view mirror, having the actuator as claimed in any one of claims 1 to 7 provided within the mirror housing thereof.
